# EUROPEAN PATENT APPLICATION

(11) **EP 4 607 658 A1**
(43) Date of publication of application: **27.08.2025**
(21) Application number: 24190894.6
(22) Date of filing: 25.07.2024
(51) Int. Cl.: H01M 50/103, H01M 50/15, H01M 50/627, H01M 50/30, H01M 50/645

(54) **SECONDARY BATTERY WITH CAP PLATE INSULATOR**

(30) Priority: 26.02.2024 KR 20240027434
(71) Applicant: SAMSUNG SDI CO., LTD., Giheung-gu Yongin-si, Gyeonggi-do 17084 (KR)
(72) Inventor: Kwak, Yechan, 17084 Yongin-si, Gyeonggi-do (KR); Ji, Hyeongwoo, 17084 Yongin-si, Gyeonggi-do (KR); Lim, Hyunyoung, 17084 Yongin-si, Gyeonggi-do (KR); Lee, Hyun Soo, 17084 Yongin-si, Gyeonggi-do (KR); Heo, Youngjin, 17084 Yongin-si, Gyeonggi-do (KR); Jeong, Myungha, 17084 Yongin-si, Gyeonggi-do (KR)
(74) Representative: Gulde & Partner

(57) **Abstract**

A cap plate insulator (57, 100) and a secondary battery including the same are provided, with cap plate insulator (57, 100) being positioned between a cap plate (61) and an electrode assembly (40) and structured to prevent an electrolyte injected through the electrolyte injection port (64) from directly spraying onto the electrode assembly (40). To this end, there is provided an insulator (57, 100) between the electrode assembly (40) and the cap plate (61), with the cap plate (61) including a barrier (115) for changing a path of an electrolyte injected through the electrolyte injection port (64) and means for guiding the electrolyte into the electrode assembly (40)..

## Description

### BACKGROUND

### 1. Field

Aspects of the present disclosure relate to a secondary battery such as, for example, to a cap plate insulator and a secondary battery including the cap plate insulator.

### 2. Description of the Related Art

Unlike primary batteries that are not designed to be recharged, secondary batteries are designed to be discharged and recharged. In general, a secondary battery may include an electrode assembly composed of a positive electrode and a negative electrode, a case accommodating the electrode assembly, an electrode terminal connected to the electrode assembly, a vent for discharging gas generated inside the case, and the like.

The electrode assembly is accommodated inside the case, and the electrode terminal and the vent are assembled to a cap plate and exposed to the outside. The cap plate is formed with an electrolyte injection port. After the electrode assembly is put into the case and the cap plate is bonded to the case, an electrolyte is injected through the electrolyte injection port which is then sealed by a sealing plug. The cap plate may be provided at the bottom thereof with an insulator for insulation from the electrode plate and current collector of the electrode assembly in the secondary battery. This insulator is also called a bottom insulator since it is at the bottom of the cap plate.

The electrolyte may be injected into the cell through the electrolyte injection port of the cap plate at high pressure to speed up production, which may cause damage to the electrode plate of the electrode assembly.

The above information disclosed in this section is for enhancement of understanding of the present disclosure, and therefore, it may contain information that does not constitute related (or prior) art.

### SUMMARY

Accordingly, an object of the present disclosure is to propose an insulator provided between a cap plate and an electrode assembly and structured to have an improved electrolyte passage hole formed at a position thereof corresponding to an electrolyte injection port of the cap plate to prevent an electrolyte injected through the electrolyte injection port from directly spraying onto the electrode assembly, and a secondary battery employing the same.

According to some embodiments of the present disclosure, there is provided a secondary battery that includes an electrode assembly, a case for accommodating the electrode assembly therein, a cap plate including a terminal connected to the electrode assembly and an electrolyte injection port, the cap plate being bonded to the case, and an insulator positioned between the electrode assembly accommodated in the case and the cap plate, and including a barrier configured to change a path of an electrolyte injected through the electrolyte injection port of the cap plate and an input space for guiding the electrolyte whose path is changed to be input into the electrode assembly.

The barrier may be spaced apart from the insulator at a position corresponding to the electrolyte injection port of the cap plate.

The insulator may further include a boundary for bounding the input space, and a barrier connection bar extending from the boundary to the barrier.

The boundary may include a wall raised from the surface of the insulator.

The boundary may have a semicircular shape, a circular shape, a polygonal shape, or an irregular shape.

The input space may be partitioned by the barrier connection bar.

The secondary battery may include two or more barrier connection bars.

The barrier may have a circular shape, a polygonal shape, or an irregular shape.

According to some embodiments of the present disclosure, there is provided an insulator for a secondary battery including an electrode assembly and a cap plate comprising an electrolyte injection port, the insulator including a barrier configured to change a path of an electrolyte injected through the electrolyte injection port of the cap plate, and an input space for guiding the electrolyte into the electrode assembly.

Specifically, there may be provided an insulator used for a secondary battery that includes an electrode assembly, a case for accommodating the electrode assembly therein, and a cap plate including a terminal connected to the electrode assembly and an electrolyte injection port, and bonded to the case, the insulator being positioned between the electrode assembly accommodated in the case and the cap plate, the insulator including a barrier configured to change a path of an electrolyte injected through the electrolyte injection port of the cap plate, and an input space for guiding the electrolyte whose path is changed by the barrier to be input into the electrode assembly.

The barrier may be spaced apart from the insulator at a position corresponding to the electrolyte injection port of the cap plate.

The insulator may further include a boundary for bounding the input space, and a barrier connection bar extending from the boundary to the barrier.

The boundary may include a wall raised from the surface of the insulator.

According to some embodiments of the present disclosure, there is provided an apparatus for manufacturing an insulator positioned between a cap plate including an electrolyte injection port and an electrode assembly accommodated in a case, which includes an insulator body molding part, a barrier molding part configured to form a barrier that changes a path of an electrolyte injected through the electrolyte injection port of the cap plate, and an input space molding part configured to define an input space that guides the electrolyte whose path is changed by the barrier to be input into the electrode assembly.

The barrier molding part may form the barrier to be spaced apart from the insulator at a position corresponding to an electrolyte injection port of a cap plate of the secondary battery.

The apparatus may further include a boundary molding part configured to form a boundary that bounds the input space as a wall raised from the surface of the insulator; and a barrier connection bar molding part configured to form a barrier connection bar extending from the boundary to the barrier.

According to some embodiments of the present disclosure, there is provided a secondary battery including an electrode assembly, a cap plate including an electrolyte injection port, and an insulator positioned between the electrode assembly and the cap plate, the insulator including a barrier positioned between the electrolyte injection port and the electrode assembly, wherein a gap between the insulator and the barrier provides a fluid passage for electrolyte to flow from the electrolyte injection port to the electrode assembly.

In some embodiments, a straight line passing through the electrolyte injection port to the electrode assembly passes through the barrier.

In some embodiments, every straight line passing through the electrolyte injection port to the electrode assembly passes through the barrier.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a top perspective view according to some embodiments of the present disclosure;
FIG. 2 is a cross-sectional view taken along line I-I' of FIG. 1;
FIG. 3 is a schematic view for briefly explaining a coupling relationship among a cap plate, an electrode assembly, and an insulator therebetween according to some embodiments of the present disclosure;
FIG. 4 is a bottom view for explaining one form of the insulator illustrated in FIG. 3;
FIG. 5 is a longitudinal cross-sectional view around the electrolyte passage hole and the gas passage hole of FIG. 4;
FIG. 6 is a view illustrating a conceptual configuration of an insulator according to some embodiments of the present disclosure;
FIG. 7 is a bottom view of an insulator coupled to the cap plate;
FIG. 8 is a bottom perspective view of an electrolyte passage hole formed in the insulator;
FIG. 9 is a cross-sectional view of the cap plate and the insulator, taken in a longitudinal direction of the cap plate around an electrolyte injection port;
FIG. 10 is a view of the cap plate and the insulator when viewed from the side of FIG. 8;
FIG. 11 illustrates another electrolyte passage hole according to some other embodiments of the present disclosure;
FIG. 12 illustrates another electrolyte passage hole according to some other embodiments of the present disclosure;
FIG. 13 is a view of a secondary battery module in which secondary batteries are arranged according to some embodiments of the present disclosure;
FIG. 14 is an exemplary view of a secondary battery pack including the secondary battery module in FIG. 13; and
FIG. 15 is a conceptual view illustrating a vehicle equipped with the secondary battery pack in FIG. 14.

### DETAILED DESCRIPTION

Hereinafter, some embodiments of the present disclosure will be described with reference to the accompanying drawings. Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The embodiments described in this specification and the configurations shown in the drawings are only some of the embodiments of the present disclosure and do not represent all of the technical concepts, aspects, and features of the present disclosure. Accordingly, it should be understood that there may be various equivalents and modifications that can replace or modify the embodiments described herein at the time of filing this application.

It will be understood that when an element or layer is referred to as being "on," "linked to," "connected to," or "coupled to" another element or layer, it may be directly on, connected, or coupled to the other element or layer or one or more intervening elements or layers may also be present. When an element or layer is referred to as being "directly on," "directly linked to," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

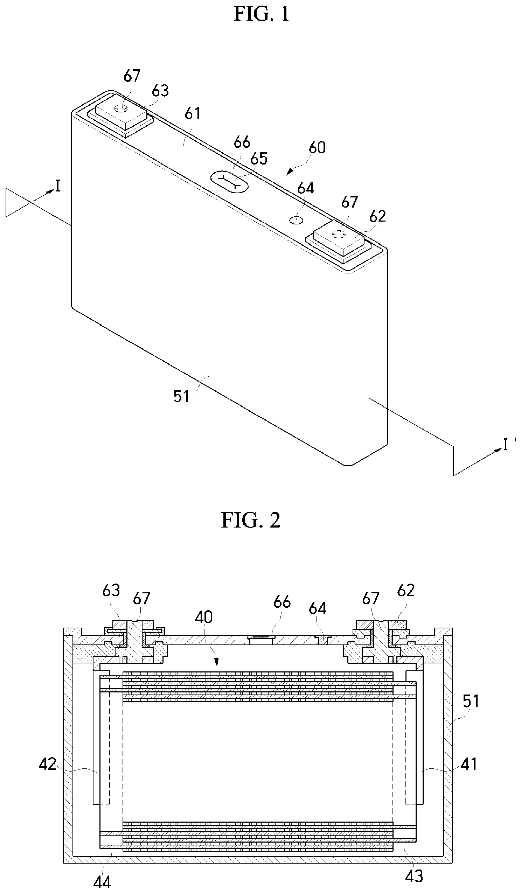

FIG. 1 is a top perspective view of a prismatic secondary battery, according to some embodiments of the present disclosure. First, the external appearance of the prismatic secondary battery illustrated in FIG. 1 will be described.

A case 51 defines an overall appearance of the prismatic secondary battery, and may be made of a conductive metal, such as aluminum, aluminum alloy, or nickel-plated steel. In addition, the case 51 may provide a space for accommodating an electrode assembly therein.

A cap assembly 60 may include a cap plate 61 that covers the opening of the case 51. In some embodiments, the case 51 and the cap plate 61 may be made of a conductive material. Here, a first terminal 63 and a second terminal 62 may be electrically connected to respective positive and negative (or negative and positive) electrodes inside the case 51, and may be installed to protrude outward through the cap plate 61.

The cap plate 61 may be equipped with an electrolyte injection port 64 formed to install a sealing plug (or seal pin), and a vent 66 formed with a notch 65. The vent 66 can discharge gas generated inside the secondary battery.

FIG. 2 is a cross-sectional view taken along the line I-I' of FIG. 1, according to some embodiments of the present disclosure. With reference to FIG. 2, the internal structure of the prismatic secondary battery and the coupling structure with the cap assembly 60 will be further described.

As shown in FIG. 2, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction (e.g., the y direction) of the case 51. In some embodiments, the electrode assembly 40 is a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode, or vice versa.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab 43 is located on the left side of the electrode assembly 40, and the second electrode tab 44 may be located on the right side of the electrode assembly 40. In some embodiments, the first electrode tab 43 and the second electrode tab 44 are located on one side of the electrode assembly 40 in the same direction. Here, for convenience of description, the left and right sides are defined according to the secondary battery as oriented in FIG. 1, and the positions thereof may change when the secondary battery is rotated left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, and/or the like.

The first electrode tab 43 of the first electrode plate and the second electrode tab 44 of the second electrode plate may be positioned at both ends (e.g., opposite ends) of the electrode assembly 40. In some embodiments, the electrode assembly 40 is accommodated in the case 51 along with an electrolyte. In some embodiments, in the electrode assembly 40, the first current collector 41 and the second current collector 42 may be welded and connected to the first electrode tab 43 of the first electrode plate and the second electrode tab 44 of the second electrode plate exposed on both sides, respectively, to then be positioned thereat, respectively.

The first current collector 41 and the second current collector 42 may be electrically connected to the first terminal 62 and the second terminal 63 described in FIG. 1 through connection members 67, respectively. In some embodiments, the connection members 67 may each have an outer peripheral surface that is threaded, and may be fastened to the first terminal 62 and the second terminal 63 by screwing. However, the present disclosure is not limited thereto. For example, the connection members 67 may also be coupled to the first terminal 62 and the second terminal 63 by riveting or welding.

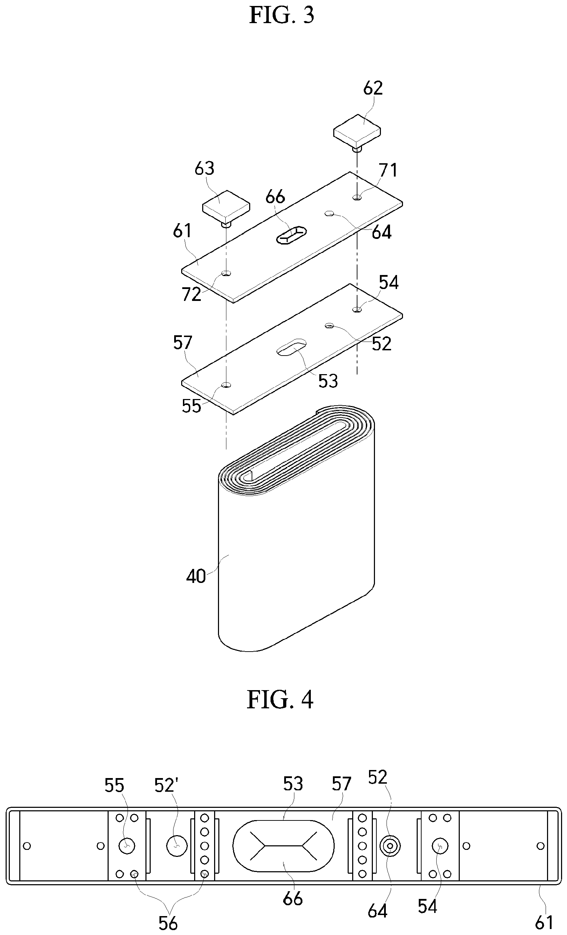

FIG. 3 is a schematic view for briefly explaining a coupling relationship among a cap plate 61, an electrode assembly 40, and an insulator 57 therebetween according to some embodiments of the present disclosure.

For electrical insulation between the electrode assembly 40 and the cap plate 61, the insulator 57 may be interposed between the top of the electrode assembly 40 and the bottom of the cap plate 61.

The insulator 57 has an electrolyte passage hole 52 formed to communicate with an electrolyte injection port 64 of the cap plate 61 and a gas passage hole 53 formed to communicate with a vent 66 of the cap plate 61.

In FIG. 3, terminals 62 and 63 may be connected to the electrode tabs (not shown) of the electrode assembly 40 through through-holes 54 and 55 formed in the insulator 57 at positions corresponding to through-holes 71 and 72 formed in the cap plate 61. A sealing plug may be inserted and welded into the electrolyte injection port 64 after an electrolyte is injected therethrough.

FIG. 4 is a bottom view of the insulator 57 coupled to the cap plate 61 when viewed from the electrode assembly 40 for explaining one form of the insulator 57 schematically illustrated in FIG. 3.

The vent 66 of the cap plate 61 may be visible through the gas passage hole 53 of the insulator 57, and the electrolyte injection port 64 may be visible through the electrolyte passage hole 52. In FIG. 4, the insulator 57 may have an extra electrolyte passage hole 52' formed at a symmetrical position of the electrolyte passage hole 52. This extra electrolyte passage hole 52' may enhance productivity by allowing a worker to quickly assemble the insulator 57 without considering orientation when manufacturing a secondary battery.

The insulator may have a plurality of small through-holes 56 formed around the electrolyte passage holes 52 and 52'. These small through-holes 56 may allow the electrolyte injected into the secondary battery case 51 to freely flow between the upper and lower surfaces of the insulator 57.

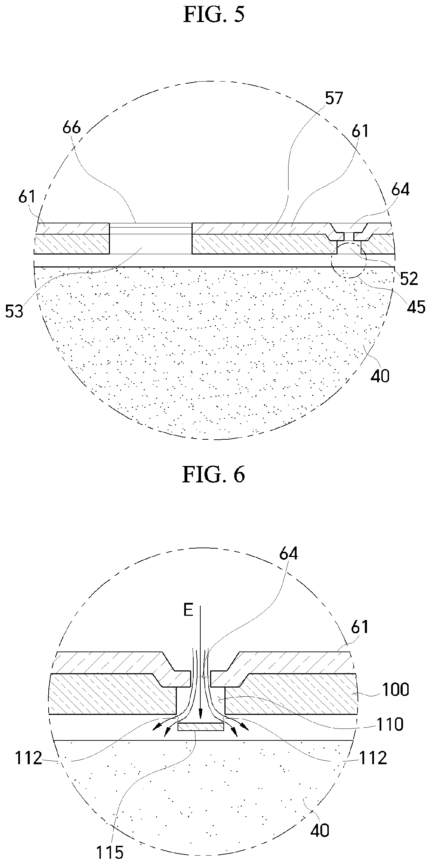

FIG. 5 is a longitudinal cross-sectional view around the electrolyte passage hole 52 and the gas passage hole 53 of FIG. 4.

In the production process of the secondary battery, the electrolyte injected through the electrolyte injection port 64 of the cap plate 61 may be input into the electrode assembly 40 through the electrolyte passage hole 52 of the insulator 57. In some embodiments, the electrolyte is injected through the electrolyte injection port 64 at high pressure in order to speed up production. However, the electrolyte injected at high pressure in this way may cause damage to the electrode plate of the electrode assembly 40 (particularly, to the portion indicated by reference numeral 45 in FIG. 5).

For example, with thinner separators and increased battery capacity, the distance between the electrode assembly 40 and the insulator 57 may be close enough to almost touch, and may cause a high possibility of making the above-mentioned problem worse.

FIG. 6 schematically illustrates a configuration of an insulator 100, which has been improved to solve the above-described problem, according to some embodiments of the present disclosure.

When an electrolyte E is injected through the electrolyte injection port 64 of the cap plate 61, the electrolyte E may flow into the case 51 through an electrolyte passage hole 110 of the insulator 100.

A barrier 115 may be located beneath the electrolyte passage hole 110. The barrier 115 is positioned such that every straight line passing through the electrolyte injection port 64 to the electrode assembly passes through the barrier 115. Thus, the electrolyte E flows down through the electrolyte passage hole 110, may be initially blocked by the barrier 115, changes its path sideways after hitting the barrier 115, and is then input into the electrode assembly 40 by guidance through an input space defined widely therearound. Therefore, it is possible to reduce or prevent damage caused by the electrolyte E directly hitting the electrode plate of the electrode assembly 40 beneath the insulator 100.

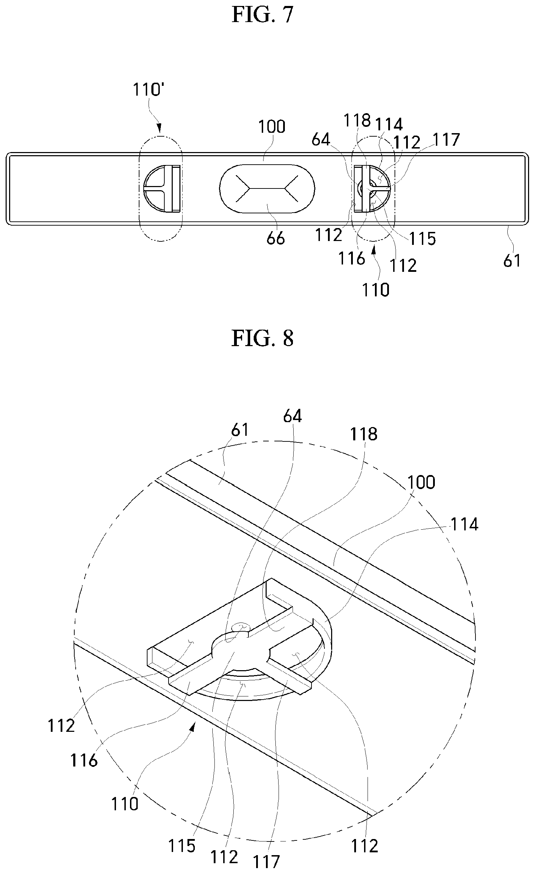

FIG. 7 illustrates an insulator 100 according to some embodiments that implement the above-mentioned concept of the present disclosure. FIG. 7 illustrates the insulator 100 coupled to the cap plate 61 when viewed from below, as in FIG. 4.

The insulator 100 may have an electrolyte passage hole 110 shaped differently from the electrolyte passage hole 52 (which may be a simple perforation) of FIG. 4. Specifically, the electrolyte passage hole 110 according to the embodiment illustrated in FIG. 7 may include a boundary 114 sized relatively larger than the electrolyte injection port 64 of the cap plate 61 and configured to define the input space 112 (see FIG. 6) for guidance of input of an electrolyte, a barrier 115 at a position corresponding to the electrolyte injection port 64 of the cap plate 61 to block the electrolyte injected through the electrolyte injection port 64 from directly hitting the electrode assembly 40, and a barrier connection bar formed at one point of the boundary 114 and extending to the barrier 115. The barrier connection bar may include a first connection bar 116, a second connection bar 117, and a third connection bar 118.

As such, the barrier 115 may be fixed at an injection position (defined as a position corresponding to the electrolyte injection port 64 of the cap plate 61) by the first connection bar 116, the second connection bar 117, and the third connection bar 118. For example, the barrier 115 may be a distal end of the barrier connection bar extending from the boundary 114 to the injection position, and the distal end may be larger than or at least equal to the size (e.g., width) of each connection bar 116, 117, or 118 to faithfully function as the barrier 115.

In some embodiments, the number of barrier connection bars may be one or two.

In some embodiments, the number of barrier connection bars may be three, as illustrated in FIG. 7, or more.

The insulator 100 may have an extra electrolyte passage hole 110' formed to have the same configuration as the electrolyte passage hole 110 and located symmetrically thereto on the opposite side of the vent 66 of the cap plate 61. This may enhance productivity by allowing a worker to quickly assemble the insulator 100 without considering orientation in the process of manufacturing the secondary battery, as mentioned above.

The structure of the insulator 100 according to some embodiments of the present disclosure will be described in detail with reference to FIGS. 8 to 10.

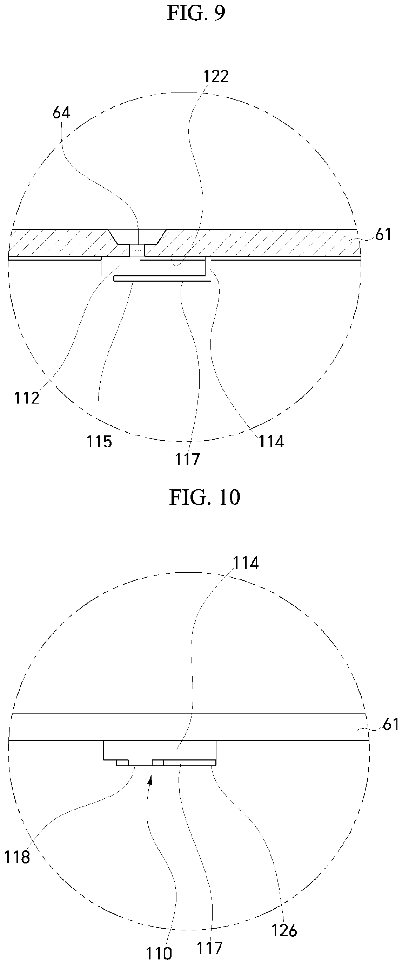

FIG. 8 is a bottom perspective view of the electrolyte passage hole 110 formed in the insulator 100. FIG. 9 is a cross-sectional view of the cap plate 61 and the insulator 100, taken in the longitudinal direction of the cap plate 61 around the electrolyte injection port 64. FIG. 10 is a view of the cap plate 61 and the insulator 100 when viewed from the side of FIG. 8. FIGS. 8, 9, and 10 illustrate the shape of the electrolyte passage hole 110 formed in the insulator 100 in more detail.

The boundary 114 described in the bottom view of FIG. 7 may form a wall raised to a certain height from the upper inner surface 122 of the body of the insulator 100, as illustrated in FIG. 8. The boundary 114 may be integrally formed by the same mold or a different mold when forming the insulator 100, or may be manufactured separately from the insulator 100 and then bonded to the upper inner surface 122 of the body of the insulator 100.

The barrier connection bar described in FIG. 7 (e.g., the first connection bar 116, the second connection bar 117, and a third connection bar 118) may be formed on the roof of the boundary 114, which may be raised in the form of a wall (the upper surface of the raised wall), and may extend to the barrier 115 at a position corresponding to the electrolyte injection port 64 of the cap plate 61. Accordingly, the barrier 115 may be fixed at an injection position by the first connection bar 116, the second connection bar 117, and the third connection bar 118. In some embodiments, the barrier 115 may be spaced apart from the upper inner surface 122 of the body of the insulator 100 by at least the height of the wall of the boundary 114 to define a lateral input space 112. For example, the barrier 115 may be fixed at a position corresponding to the electrolyte injection port 64 of the cap plate 61, and may be separated apart from the electrolyte injection port 64 by a distance corresponding to the height of the wall of the boundary 114.

This structure allows the electrolyte to hit the barrier 115 spaced below the electrolyte injection port 64 to deflect sideways through the input space 112 among the first, second, and third connection bars 116, 117, and 118 for input into the electrode assembly 40, even if the electrolyte is injected through the electrolyte injection port 64 at high pressure. Therefore, it is possible to reduce or prevent the electrolyte from directly hitting the electrode assembly 40.

Furthermore, since the electrolyte passage hole 110 has a wider cross-sectional area for pass of the injected electrolyte than the electrolyte passage hole 52 (see FIG. 4) by the input space 112 expanded in size, it is possible to reduce or prevent the electrolyte from flowing back onto the cap plate 61 by overflowing even if the electrolyte is injected at high speed from outside the cap plate 61.

The electrolyte passage hole 110 of the present disclosure may be implemented in various examples.

FIGS. 6 to 8 have illustrated the electrolyte passage hole 110 in which the boundary 114 is approximately semicircular in shape, the connection bar is composed of three connection bars: the first connection bar 116, the second connection bar 117, and the third connection bar 118, and the input space 112 is partitioned into three areas.

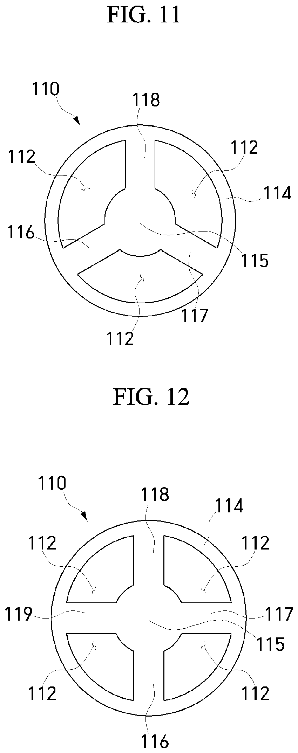

FIG. 11 illustrates an electrolyte passage hole 110, which includes a circular boundary 114, a connection bar composed of three connection bars: a first connection bar 116, a second connection bar 117, and a third connection bar 118, and an input space 112 partitioned into three areas.

FIG. 12 illustrates an electrolyte passage hole 110, which includes a circular boundary 114, a connection bar composed of four connection bars: a first connection bar 116, a second connection bar 117, a third connection bar 118, and a fourth connection bar 119, and an input space 112 partitioned into four areas.

In addition to the examples illustrated in FIGS. 11 and 12, the electrolyte passage hole 110 may be modified and implemented into various types. For example, the barrier 115 may be implemented in a polygonal shape, such as triangle, square, or pentagon, or an unfixed irregular shape, in addition to the circle introduced above.

Each connection bar 116, 117, 118, or 119 may be implemented in various shapes such as a radial shape or a concentric circle, in addition to the simple straight shape described above. For example, the connection bar(s) may be shaped to reduce or prevent damage to the electrode assembly 40 when coming into contact with the electrode assembly 40 located therebeneath. In some embodiments, the boundary 114 may be implemented in a polygonal or irregular shape, in addition to the semicircular or circular shape described above. The number of connection bars may be at least one to form the barrier 115 at the distal end of the connection bar extending from the boundary 114 to the injection position of electrolyte.

Although the cap plate insulator of the prismatic battery has been illustrated in the above embodiments, but the present disclosure is also applicable to other types of batteries. For example, in order to reduce or prevent the electrolyte injected at high pressure from the outside from directly hitting the electrode assembly, the above-mentioned electrolyte passage hole 110 including the barrier 115 may be installed in the insulation member positioned beneath the electrolyte injection port of a cylindrical or coin-type battery.

An apparatus that can be used for manufacturing the insulator 100 according to the present disclosure will now be described. The apparatus for manufacturing insulators may be a mold for injection molding. This mold may be made to mold the insulator 100 having the structure described above with reference to the drawings (particularly, FIGS. 7 and 8).

The mold for manufacturing insulators according to the present disclosure may include: an insulator body molding part; an input space molding part for defining an input space 112 having a relatively larger size than an electrolyte injection port of a cap plate; a boundary molding part for forming a boundary 114 around the input space 112; and a barrier molding part connected to at least one point of the boundary 114 to extend to a position corresponding to the electrolyte injection port of the cap plate and configured to form a barrier 115 at the position corresponding to the electrolyte injection port.

The boundary molding part may form a wall raised from the body of the insulator around the input space defined by the input space molding part.

The barrier molding part may form one or more connection bars extending from at least one point on the raised upper surface of the wall of the boundary formed by the boundary molding part to a position corresponding to the electrolyte injection port of the cap plate. The barrier becomes the distal end of the connection bar, and the distal end may be equal to or larger than the size (e.g., width) of the connection bar.

If a simple perforation is formed at a position corresponding to an electrolyte injection port, an electrode assembly may be damaged by the electrolyte injected at high pressure. This problem may be exasperated by thinner separators. However, embodiments of the present disclosure can reduce or prevent the electrolyte from directly spraying onto the electrode assembly at high pressure by improving the structure of the electrolyte passage hole.

Additionally, for example, the present disclosure can reduce or prevent backflow of the electrolyte during injection by expanding the space through which the injected electrolyte passes for input into the electrode assembly.

The following are nonlimiting examples of materials that can be used with the secondary battery according to the present disclosure.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used as the composite oxide: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1 ); LiₐNiG_{b}O₂ (0.90≤a≤1.8, 0.001≤b≤0.1); LiₐCoG_{b}O₂ (0.90≤a≤1.8, 0.001 ≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001 ≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

In some embodiments, the content of the positive electrode active material may be in a range of about 90 wt% to about 99.5 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer.

The current collector may be aluminum (Al); however, embodiments of the present disclosure are not limited thereto.

The negative electrode active material may include a material capable of reversibly intercalating/deintercalating lithium ions, lithium metal, an alloy of lithium metal, a material capable of being doped and undoped with lithium, a transition metal oxide, and/or the like.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent, a lithium salt, and/or the like.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include polyethylene, polypropylene, polyvinylidene fluoride, or a multilayer film of two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

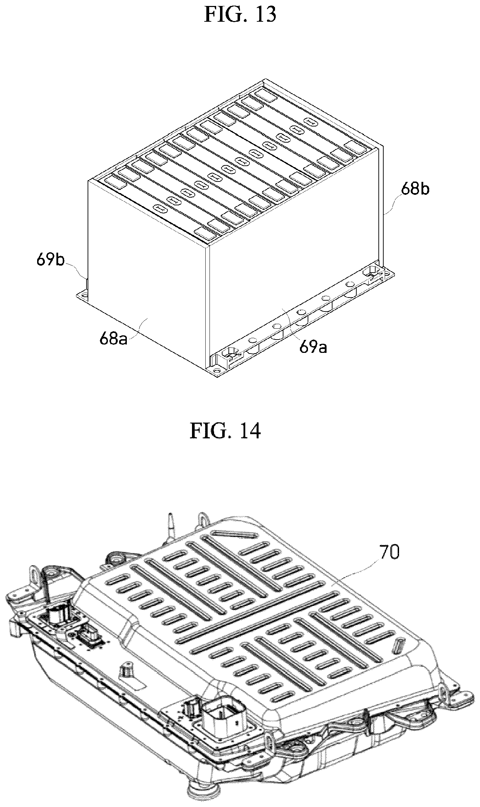

FIG. 13 is an exemplary view of a secondary battery module in which prismatic secondary batteries are arranged and including cap plate insulators according to embodiments of the present disclosure. With the increase in secondary battery capacity for driving electric vehicles or the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in a suitable arrangement (e.g., direction) and number to obtain desired voltage and current capabilities.

FIG. 14 is a view schematically showing the configuration of a battery pack 70 according to some embodiments of the present disclosure. Referring to FIG. 14, a battery pack 70 may include an assembly to which individual batteries are electrically connected and a pack housing accommodating the same. In the drawings, for convenience of illustration, some components such as a bus bar, a cooling unit, external terminals for electrically connecting batteries, etc., are not shown.

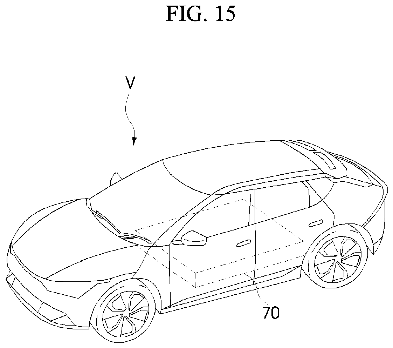

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but is not limited thereto. FIG. 15 shows a vehicle V which includes the battery pack 70 shown in FIG. 14 on the lower body thereof. The vehicle V may operate by (e.g., may be powered by) receiving power from the battery pack 70.

Although the present disclosure has been described above with respect to some embodiments thereof, the present disclosure is not limited thereto. Various suitable modifications and variations can be made thereto by those skilled in the art within the scope of the present disclosure, the scope of which is define by the appended claims and the equivalents thereof.

### [List of Reference Numerals]

40: electrode assembly, 41: first current collector, 42: second current collector, 43: first electrode tab, 44: second electrode tab, 45: damaged portion, 51: case, 52, 52': electrolyte passage hole, 53: gas passage hole, 54, 55: through-hole, 57: insulator, 60: cap assembly, 61: cap plate, 62: first terminal, 63: second terminal, 64: electrolyte injection port, 65: notch, 66 : vent, 67: connection member, 68a, 68b: end plate, 69a, 69b: side plate, 70: secondary battery pack, 100: Insulator, 110, 110': electrolyte passage hole, 112: input space, 114: boundary, 115: barrier, 116: first connection bar, 117: second connection bar, 118: third connection bar, 119: fourth connection bar, 122: upper inner surface of body of insulator 100, E: electrolyte, V: vehicle

## Claims

1. A secondary battery comprising:
an electrode assembly (40);
a case (51) accommodating the electrode assembly (40);
a cap plate (61) comprising an electrolyte injection port (64) and a terminal (62, 63) connected to the electrode assembly (40), the cap plate (61) being bonded to the case (51); and
an insulator (57, 100) positioned between the electrode assembly (40) and the cap plate (61), the insulator (57, 100) comprising a barrier (115) configured to change a path of an electrolyte injected through the electrolyte injection port (64) of the cap plate (61) and the insulator (57, 100) comprising an input space (112) for guiding the electrolyte into the electrode assembly (40).

2. The secondary battery according to claim 1, wherein the barrier (115) is spaced apart from the insulator (57, 100) at a position corresponding to the electrolyte injection port (64) of the cap plate (61).

3. The secondary battery according to claim 1 or 2, wherein the insulator (57, 100) further comprises:
a boundary (114) for bounding the input space (112); and
a barrier connection bar (116, 117, 118) extending from the boundary (114) to the barrier (115).

4. The secondary battery according to claim 3, wherein the boundary (114) comprises a wall raised from the surface of the insulator (57, 100).

5. The secondary battery according to claim 3 or 4, wherein the boundary (114) has a semicircular shape, a circular shape, a polygonal shape, or an irregular shape.

6. The secondary battery according to any one of claims 3 to 5, wherein the input space (112) is partitioned by the barrier connection bar (116, 117, 118).

7. The secondary battery according to any one of claims 3 to 6, comprising two or more barrier connection bars (116, 117, 118).

8. The secondary battery according to any one of the preceding claims, wherein the barrier (115) has a circular shape, a polygonal shape, or an irregular shape.

9. An insulator (57, 100) for a secondary battery comprising an electrode assembly (40) and a cap plate (61) comprising an electrolyte injection port (64), the insulator (57, 100) comprising:
a barrier (115) configured to change a path of an electrolyte injected through the electrolyte injection port (64) of the cap plate (61), and an input space (112) for guiding the electrolyte into the electrode assembly (40).

10. The insulator (57, 100) according to claim 9, wherein the barrier (115) is spaced apart from the insulator (57, 100) at a position corresponding to the electrolyte injection port (64) of the cap plate (61).

11. The insulator (57, 100) according to claim 9 or 10, further comprising:
a boundary (114) for bounding the input space (112); and
a barrier connection bar (116, 117, 118) extending from the boundary (114) to the barrier (115).

12. The insulator (57, 100) according to claim 11, wherein the boundary (114) comprises a wall raised from the surface of the insulator (57, 100).

13. An apparatus for manufacturing an insulator (57, 100) for a secondary battery comprising an electrode assembly (40), the apparatus comprising:
an insulator body molding part;
a barrier molding part configured to form a barrier (115) that is configured to change a path of an electrolyte injected into the secondary battery; and
an input space molding part configured to define an input space (112) that is configured to guide the electrolyte into the electrode assembly (40).

14. The apparatus according to claim 13, wherein the barrier molding part forms the barrier (115) to be spaced apart from the insulator (57, 100) at a position corresponding to an electrolyte injection port (64) of a cap plate (61) of the secondary battery.

15. The apparatus according to claim 13 or 14, further comprising:
a boundary molding part configured to form a boundary (114) that bounds the input space (112) as a wall raised from the surface of the insulator (57, 100); and
a barrier connection bar molding part configured to form a barrier connection bar (116, 117, 118) extending from the boundary (114) to the barrier (115).

## Amended claims

### Amended claims in accordance with Rule 137(2) EPC.

1. An insulator (57, 100) for a secondary battery comprising an electrode assembly (40) and a cap plate (61) including an electrolyte injection port (64), the insulator (57, 100) comprising:
a barrier (115) configured to change a path of an electrolyte injected through the electrolyte injection port (64) of the cap plate (61);
an input space (112) for guiding the electrolyte into the electrode assembly (40);
a boundary (114) for bounding the input space (112); and
a barrier connection bar (116, 117, 118) extending from the boundary (114) to the barrier (115).

2. The insulator (57, 100) according to claim 1, wherein the barrier (115) is spaced apart from an upper inner surface (122) of a body of the insulator (57, 100) at a position corresponding to the electrolyte injection port (64) of the cap plate (61).

3. The insulator (57, 100) according to claim 1 or 2, wherein the boundary (114) comprises a wall raised from the surface of the upper inner surface (122) of the body of the insulator (57, 100).

4. The insulator (57, 100) according to any one of the preceding claims, wherein the boundary (114) has a semicircular shape, a circular shape, a polygonal shape, or an irregular shape.

5. The insulator (57, 100) according to any one of the preceding claims, wherein the input space (112) is partitioned by the barrier connection bar (116, 117, 118).

6. The insulator (57, 100) according to any one of the preceding claims, comprising two or more barrier connection bars (116, 117, 118).

7. The insulator (57, 100) according to any one of the preceding claims, wherein the barrier (115) has a circular shape, a polygonal shape, or an irregular shape.

8. A secondary battery comprising:
an electrode assembly (40);
a case (51) accommodating the electrode assembly (40);
a cap plate (61) comprising an electrolyte injection port (64) and a terminal (62, 63) connected to the electrode assembly (40), the cap plate (61) being bonded to the case (51); and
an insulator (57, 100) according to any one of the preceding claims positioned between the electrode assembly (40) and the cap plate (61).

9. An apparatus for manufacturing an insulator (57, 100) for a secondary battery comprising an electrode assembly (40), the apparatus comprising:
an insulator body molding part;
a barrier molding part configured to form a barrier (115) that is configured to change a path of an electrolyte injected into the secondary battery;
an input space molding part configured to define an input space (112) that is configured to guide the electrolyte into the electrode assembly (40);
a boundary molding part configured to form a boundary (114) that bounds the input space (112) as a wall raised from the surface of the insulator (57, 100); and
a barrier connection bar molding part configured to form a barrier connection bar (116, 117, 118) extending from the boundary (114) to the barrier (115).

10. The apparatus according to claim 9, wherein the barrier molding part forms the barrier (115) to be spaced apart from an upper inner surface (122) of a body of the insulator (57, 100) at a position corresponding to an electrolyte injection port (64) of a cap plate (61) of the secondary battery.
